Europäisches Patentamt

European Patent Office

Office européen des brevets

(11) Publication number: **0 269 324 B1**

## EUROPEAN PATENT SPECIFICATION

(45) Date of publication of patent specification: **30.12.92**

(51) Int. Cl.5: **C08F 265/04**, C08F 2/22, C08L 101/00

(21) Application number: **87310032.5**

(22) Date of filing: **13.11.87**

(54) Particulate polymer composition, a method of making particulate polymer compositions, and light-scattering thermoplastic polymer compositions containing the particulate polymers.

(30) Priority: **18.11.86 US 932133**

(43) Date of publication of application:
**01.06.88 Bulletin 88/22**

(45) Publication of the grant of the patent:
**30.12.92 Bulletin 92/53**

(84) Designated Contracting States:
**AT BE CH DE ES FR GB IT LI NL SE**

(56) References cited:
**EP-A- 0 073 450**
**EP-A- 0 110 123**
**US-A- 3 808 180**
**US-A- 3 859 389**
**US-A- 4 226 752**

(73) Proprietor: **ROHM AND HAAS COMPANY
Independence Mall West
Philadelphia Pennsylvania 19105(US)**

(72) Inventor: **Work, William James
1288 Burnett Road
Huntingdon Valley Pennsylvania 19006(US)**
Inventor: **Wu, Jiun-Chen
105 Heather Valley Road
Holland Pennsylvania 18966(US)**

(74) Representative: **Angell, David Whilton et al
ROHM AND HAAS (UK) LTD. European Operations Patent Department Lennig House 2 Mason's Avenue
Croydon CR9 3NB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention is concerned with light-diffusing polymers and to light-scattering thermoplastic compositions. It further relates to particulate polymeric additives useful in making such compositions and the process for making such additives.

Light-diffusing polymers are "semi-transparent" or translucent to visible light, that is, they scatter transmitted light, preferably without significantly reducing its intensity. They may be clear or colored, and may be incorporated into clear or colored thermoplastic polymer matrices to form light-scattering thermoplastic compositions which may be formed into sheets or films of various thicknesses, or into more complex shapes. Such compositions find use as luminaires, rear projection screens for television or film viewing, decoration, and many related applications.

Early light diffusers were made from glass, typically by surface treatment such as grinding or etching. Polymeric light-scatterers initially used similar processes, or incorporated finely ground inorganic particles, such as titanium dioxide, barium sulfate and silica, into the polymer matrix. Such particles were difficult to disperse evenly, they reduced the light transmission of the polymer unacceptably, and, because they were usually hard, irregular, ground particles, they tended to abrade the processing equipment. They were also difficult to obtain in reasonably uniform particle-size distributions.

Glass microspheres solved some of the problems associated with other inorganic particles; they were less abrasive because they were spheres, and they allowed greater light transmission. But they were still generally non-uniform in size, and they shared a tendency with the other inorganic light diffusers to reduce the physical strength of the polymer.

Light-diffusing polymer particles have also been used to introduce light-scattering properties into transparent matrix polymers. Land, US-A-4,165,153, teaches incorporating polymer particles having a refractive index preferably at least 0.1 units below that of the matrix polymer. Lang, US-A-3,992,486, teaches the use of opaque, porous, crosslinked polymer particles smaller than about 30$\mu$m, formed by endopolymerization and having a refractive index preferably above that of the matrix polymer, as an opacifier, flatting agent and pigment as well as a light-diffusing agent. Krieg et al., US-A-3,883,617, teaches precipitating styrene particles within a monomer system during polymerization, and subsequently thermally crosslinking these particles to form light diffusers. As only styrene is taught, no flexibility exists in selecting the refractive index of the particles with respect to the matrix polymer. Kishida et al., in Japanese 59-38252, teach suspension-polymerized particles of 10 to 500$\mu$m diameter as light-diffusing particles.

Ryan in US-A-3562235 teaches multi-stage emulsion polymers prepared by conventional emulsion technology but fails to disclose or suggest measure to obtain the particle size and particle size distribution of the present invention.

Each of the prior art light-diffusing particles suffers from one or more of the following problems: poor particle-size uniformity, inflexibility of refractive-index choice, poor adhesion of the particle to the matrix polymer with accompanying degradation of matrix-polymer physical strength, and degradation of light transmission in the matrix polymer. Accordingly, it is an object of the present invention to produce a polymer particle having light-diffusing properties and which is capable of reducing one or more of the above problems. Other objects of the invention will be apparent from the following.

In accordance with one aspect of the present invention we provide a novel, particulate, light-diffusing polymer composition which is suitable for incorporation into a thermoplastic matrix polymer to prepare a light-scattering thermoplastic composition, and in a second aspect of the present invention we provide the light-scattering compositions so prepared, such light-scattering compositions are especially useful for rear-projection television screens, luminaires, decorations and related uses for a strong, light-scattering composition. In a third aspect of the present invention, we provide a process for making the novel particulate polymer composition.

The particulate polymer composition comprises particles of core/shell polymer having an average diameter of from about 2 to about 15 $\mu$m, a particle size distribution such that at least 90% by weight of the particles fall within ±20% of the average particle diameter, a core of rubbery alkyl acrylate polymer, the alkyl group having from 2 to 8 carbon atoms, the core containing from 0 to 50% copolymerizable vinyl monomer, 0 to about 5% crosslinker and 0 to about 5% graftlinker (based on the total weight of the core) and having a refractive index ($n_D^{25}$) within about ±0.2 of units, preferably ±0.06 units of, more preferably ±0.05 units of, and even more preferably about ±0.03 units of, but preferably no closer than about ±0.003 to, the regractive index of the matrix polymer, and one or more polymer shells, the outermost of which is compatible with the matrix polymer, which shells comprise from 5 to 40% of the weight of the particles.

The light-scattering thermoplastic composition comprises a thermoplastic matrix polymer and from about 0.1 to about 10% of the particulate polymer composition wherein the outer shell of polymer is

EP 0 269 324 B1

compatible with the thermoplastic polymer and wherein the refractive index of the core is within ±0.06 units, preferably about ±0.05 units, and more preferably about ±0.03 units of, but no closer than about ±0.003 to, the refractive index of the thermosplastic polymer.

The particulate polymer of the present invention comprises individual particles with a diameter from about 2 to about 15 $\mu$m, preferably from about 5 to about 10 $\mu$m, and a narrow particle-size distribution. The particle size distribution is such that at least 90% by weight of the particles fall within ±20% of the average diameter of the particles; it is understood that the term "particle size distribution" used herein refers to the size range of at least 90% by weight of the particles. The particles have a core of rubbery alkyl acrylate polymer, the alkyl group having from 2 to 8 carbon atoms, copolymerized with from 0 to about 5% crosslinking monomer, from 0 to about 5% graftlinking monomer, and from 0 to about 50% other copolymerizable vinyl monomer. The preferred alkyl acrylate is butyl acrylate, and the preferred other copolymerizable vinyl monomer or monomers are more preferably monovinyl monomers, preferably selected from the group consisting of alkyl methacrylates and monovinyl arenes, and still more preferably styrene. Monovinyl arenes, as used herein, include such monoethylenically unsaturated aromatic monomers as styrene, alkylstyrenes such as methylstyrene and ethylstyrene, other substituted vinylbenzenes wherein the substituents do not interfere with polymerization, and similar vinyl polycyclic aromatic monomers. The indicated percentages are by weight (as are all proportions used herein unless otherwise indicated), and are percentages of the total core monomer. The alkyl acrylate and any copolymerizable vinyl monomer are selected such that the refractive index of the core polymer will be within about ±0.2 units, preferably about ±0.06 units, more preferably about ±0.05 units, and still more preferably about ±0.03, of the refractive index of the matrix polymer. However, as an exact match between the refractive indices of the core polymer and matrix polymer undesirably will produce an almost completely transparent composition, the refractive index of the core polymer is preferably chosen to be no closer than about ±0.003 refractive index units to that of the matrix polymer.

Crosslinking monomers suitable for use as the crosslinker in the core polymer are well known to those skilled in the art, and are generally monomers copolymerizable with the other core monomers and having polyethylenic unsaturation in which the ethylenically unsaturated groups have approximately equal reactivity, as for example divinylbenzene, glycol di- and trimethacrylates and acrylates and triol triacrylates and methacrylates. The preferred crosslinking monomers are butylene glycol diacrylates. If crosslinking monomer is employed, it is preferably used at levels of from about 0.05 to about 5%, more preferably from about 0.1 to about 1%, based on the total core monomer weight. Graftlinking monomers suitable for use as the graftlinker in the core polymer are also well known, and generally are polyethylenically unsaturated monomers copolymerizable with the other core monomers and having sufficiently low reactivity of the unsaturated groups to allow significant residual unsaturation to remain in the core polymer subsequent to its polymerization, as for example allyl methacrylate, diallyl maleate and allyl acryloxypropionate. The preferred graftlinking monomer is allyl methacrylate. If a graftlinking monomer is employed, it is preferably used at levels from about 0.1 to about 5%, more preferably about 0.5 to about 2.5%, based on the total weight of the core monomers.

Alternatively, the core polymer may be crosslinked and the core polymer may be graftlinked to the shell polymer using other techniques known to those skilled in the art, as for example by post-cure reactions. Such a post-cure reaction may be seen when a copolymer is formed from a monomer having apendant peroxide group, which is then activated by heating to a temperature higher than that used in the polymerization. The activated peroxide group will promote graftlinking and crosslinking of the core/shell polymer components. In another example, a second free-radical initiator may be added to the polymerization; this second initiator is selected to be stable at the initial polymerization temperature, but to be activated by light or a higher temperature subsequent to the initial polymerization.

The core polymer may contain residual oligomeric material used in the polymerization process to swell the polymer particles but such ologomeric material has a high enough molecular weight to prevent its diffusion or being extracted during processing or use, and is present at such a low concentration that it has little or no effect upon mechanical properties of the core, the core/shell polymer, or the light-scattering composition.

Surrounding the core of the particles are one or more shells of polymer, the outer shell being a polymer compatible with the matrix polymer, i.e, the polymer itself is capable of forming a homogeneous blend with the matrix polymer. The outermost shell is preferably a polymer of an alkyl methacrylate, vinyl arene, vinyl carboxylate, alkyl acrylate or a copolymer thereof. For example, a shell of poly(methyl methacrylate) will be compatible with a matrix polymer of poly(methyl methacrylate), or poly(vinyl chloride). The shell polymer may be compatible with the matrix polymer as a result of chemical similarity, as in the above example of methyl methacrylate polymers for the shell and the matrix polymer, or it may be determined empirically to

3

be compatible, as in a shell of styrene copolymerized with about 30%, based on total shell monomer weight, of acrylonitrile; this shell is also compatible with a poly(methyl methacrylate) matrix polymer. Many such compatible polymer combinations for the shell and matrix polymers are known to those skilled in the art, and others may readily be determined by routine experimentation, as for example by preparing blends of proposed shell polymers and the matrix polymer and examining the blends for such evidence of compatibility as absence of haze, existence of a single glass transition temperature, and the like.

The shell polymers comprise from about 5 to about 40%, preferably from about 15 to about 35%, of the total particle weight.

The core/shell polymer particles useful in the present invention have an average particle diameter from about 2 and about 15μm, preferably from about 5 to about 10μm, and a narrow particle size distribution within any particular polymer composition, preferably within ±20% of the average particle diameter. If many particles much larger than the desired size are present in the light-scattering composition, the efficiency of diffusion is decreased and the polymer surface is less attractive, while if many undersized particles are present, backscattering increases and overall light transmission decreases. Such a narrow size distribution is readily obtained by conventional emulsion polymerization techniques, but the particles themselves tend to be smaller than 1μm. Particles at the upper end of the desired size range may be made by conventional suspension polymerization techniques but the size distribution is unacceptably broad. Consequently, although other techniques for preparing particles having the particle size, size distribution and core-shell configuration are useful in the present invention, the preferred technique for making them involves preparing uniformly sized small particles by emulsion polymerizing at least one monomer component of the core polymer to form emulsion polymer particles, swelling the emulsion polymer particles with the same or one or more other monomer components of the core polymer, and polymerizing the monomer(s) within the emulsion polymer particles. The swelling and polymerizing steps may be repeated until the particles have grown to the desired core size. A preferred procedure for making the core involves emulsion polymerizing the initial emulsion polymer particles using conditions which restrict the molecular weight of the polymer that forms, such as by including chain-transfer moderators, e.g., mercaptans, in the polymerization mixture, such that the resulting emulsion particles comprise an easily swellable oligomer. This process may be varied by preparing the initial emulsion polymer particles in the absence of such limiting of the polymer molecular weight, but subsequently conducting one or more of the swelling and polyermizing steps using the conditions which restrict the polymer molecular weight. In this variation the initial emulsion polymer particles do not swell as readily as subsequent, larger particles having a lower overall molecular weight. As in the preferred process above, at least the final polymerization is carried out under conditions which do not so limit the polymer molecular weight.

A process for preparing a particulate polymer composition according to the invention, suitable for incorporating into a thermoplastic matrix polymer to form light-diffusing polymer compositions, comprises:

(A) forming or selecting, as rubbery core polymer composition, an aqueous emulsion of copolymer of alkyl acrylate, the alkyl group having from 2 to 8 carbon atoms, with from 0 to 50% copolymerizable vinyl monomer, 0 to 5% crosslinker and 0 to 5% graftlinker (based on the total weight of the core copolymer) and the copolymer having a refractive index with ±0.2 units, preferably ±0.05, units of, but preferably no closer than ±0.003 units to, the refractive index of the thermoplastic matrix polymer,

(B)1 swelling the polymer particles of A, or if appropriate the particles of (B) 2, with one or more monomers and

(B)2 polymerising the swelling monomer within the particles until all of the monomer has been polymerised,

steps (B)1 and (B)2 being repeated, if necessary until at least 90% by weight of the particles of the particulate composition fall, in average particle diameter, within ± 20% of a desired size which is preferably in the range 2 to 15 μm, and

(C)1 suspending the resulting polymer particles, or if appropriate the particles of (C)2, in a second aqueous monomer emulsion and

(C)2 polymerising onto the polymer particles a polymer shell from the monomer in the emulsion of (C)1, steps (C)1 and (C)2 being repeated if necessary with the same or different monomer emulsion, to form one or more polymer shells, the outermost of which is compatible with the matrix polymer, which shells comprise from 5 to 40% of the weight of the particles, the particles having a size distribution such that at least 90% by weight thereof fall within ± 20% of the average particle diameter of from 2 to 15 μm.

The shell or shells are polymerized onto the previously polymerized layers using conventional core/shell techniques such as those taught by Owens, US-A-3, 793, 902, to which reference may be made.

The above process for growing larger particles from emulsion-sized particles retains much of the size uniformity of the original, emulsion particles, and is capable of increasing the size of the original, emulsion-polymerized polymer by a factor of at least 10 and as much as 1000. A small amount of very small emulsion particles may be observed in the product of these processes, but such particles account for much less than 0.1% of the total particle weight, and do not adversely affect the optical properties of the light-scattering polymer. Related techniques for preparing uniformly sized particles in the desired size range are taught by Ugelstad, US-A-4,186,120.

The finished core/shell polymer may be isolated from the emulsion in which it is prepared using conventional techniques such as spray-drying, coagulation and the like. They may also be mixed with the matrix polymer by co-isolation in a devolatilizing extruder, as taught by Bortnick in US-A-3,751,527.

The matrix polymers useful in the present invention are preferably clear thermoplastic polymers that do not crystallize under processing or use conditions, i.e., that have a glass transition temperature higher than about 50°C, and thus are amorphous following incorporation of the particulate polymer composition of the present invention, and that remain amorphous following processing to form the light-scattering composition of the present invention or light-scattering articles made from the sheet. These matrix polymers typically have an elastic modulus of about 1400 to about 3500 MegaPascals (MPa), and may be formed into shaped articles by molding, casting, extrusion or other processes apparent to those skilled in the art. Examples of such matrix polymers include homopolymers of methyl methacrylate, styrene, vinyl chloride and the like, imidized polymers of methyl methacrylate known as polyglutarimides, and copolymers of methyl methacrylate with alkyl acrylates, styrene with up to 40% acrylonitrile, styrene with methyl methacrylate, alpha-methylstyrene with methyl methacrylate and/or alkyl acrylates and vinyl chloride with vinyl acetate and/or propylene; the alkyl group of the alkyl acrylates containing 1 to 8 carbon atoms. Also suitable are poly(cellulose acetate butyrate) and certain amorphous condensation polymers such as poly(ethylene terephthalate) and poly(cyclohexanedimethanol terephthalate). Preferred matrix polymers are copolymers of methyl methacrylate with from about 1 to about 15% alkyl acrylates wherein the alkyl contains from 1 to 8 carbon atoms.

Softer matrix polymers, including polymers capable of plasticization, may also be used, such as poly-(vinyl acetate), plasticized vinyl chloride homo-and copolymers, plasticized cellulosic esters and the like.

The core/shell polymer of the present invention is incorporated into the matrix polymers preferably by melt blending although other techniques known to those skilled in the art may be employed. For instance, they may be introduced dry into the monomers of the matrix polymer prior to their polymerization. Other conventional additives, such as ultraviolet-light stabilizers, soluble flame retardants, dyes, thermal stablilizers, and the like may also be present in the blend of core/shell polymer and matrix polymer.

The level of core/shell polymer present in the matrix polymer will depend upon the optical effect desired, the thickness of the final fabricated article, the core/shell particle size and the difference in refractive index between the particle core and the matrix polymer. A practical useful range for the core/shell polymer is from about 0.1 to about 10% of the total polymer weight, although useful effects may be achieved at levels above and below this range.

Conventional impact-strength modifiers may also be incorporated into the blend of the core/shell polymer of the present invention and matrix polymer. Such impact-strength modifiers must be chosen to give a clear, non-light-scattering blend with the matrix polymer alone. Examples of such modifiers for poly-(methyl methacrylate) are given by Owens, US-A-3,793,402, and for poly(vinyl chloride) by Myers et al., US-A-3,971,835 and Amagi et al., US-A-3,671,610. It should be noted that the core/shell polymer particles of the present invention do not significantly degrade, and may in some cases actually improve, the impact strength of the core/shell polymer-matrix polymer blend, unlike inorganic particles and hard, crosslinked polymer particles that have been used as light-scattering agents in the prior art.

The following examples are intended to illustrate the present invention. All ratios and percentages are by weight, unless otherwise noted, and all reagents are of good commercial quality unless otherwise noted.

EXAMPLES

Example 1

This example illustrates preparation of 0.3 $\mu$m-diameter particles of butyl acrylate-styrene copolymer by emulsion polymerization. The following aqueous mixtures were prepared:

| Mixture | Component | Parts by Weight |
|---------|-----------|-----------------|
| A | Water | 162 |
|   | Potassium Carbonate | 0.12 |
| B | Butyl Acrylate | 66 |
|   | Styrene | 15 |
|   | n-octyl mercaptan | 19 |
|   | 10% aqueous sodium dodecylbenzenesulfonate | 5.3 |
|   | Water | 19 |
| C | Potassium Persulfate | 0.014 |
|   | Water | 1.4 |
| D | Potassium Persulfate | 0.055 |
|   | Water | 8.3 |

A reactor equipped with a stirrer and condenser and blanketed with nitrogen was charged with Mixture A and heated to 87°C. To the stirred reactor contents were added 7% of Mixture B and all of Mixture C; the reactor contents were stirred for 30 minutes, after which the remaining Mixture B and Mixture D were added, with stirring, over a period of 90 minutes. The reactor contents were maintained at 87°C with stirring for 50 minutes, after which the resulting emulsion was cooled to room temperature. The butyl acrylate-styrene particles were 0.3$\mu$m in diameter, as measured by Nanosizer.

EXAMPLE 2

This example illustrates growing 2 $\mu$m-diameter particles of uniform size from the 0.3 $\mu$m-diameter particles of Example 1, using an emulsion of butyl acrylate with butylene glycol diacrylate crosslinking monomer and allyl methacrylate graftlinking monomer. The following aqueous mixtures were prepared:

| Mixture | Component | Parts by Weight |
|---------|-----------|-----------------|
| A | Butyl Acrylate | 98 |
|   | Butylene Glycol Diacrylate | 0.50 |
|   | Allyl Methacrylate | 2.0 |
|   | Benzoyl Peroxide | 0.80 |
| B | Magnesium p-Nitrosophenolate | 0.011 |
|   | Water | 226 |
|   | 10% aqueous Sodium Dodecyl-benzenesulfonate | 3.1 |
| C | The polymer emulsion of Ex. 1 | 1.5 |

Mixture A was blended with Mixture B in a Waring Blender for 3 minutes to form an emulsion. This emulsion was charged to a pressure reactor with Mixture C, and the reactor contents were stirred under a nitrogen blanket for 1 hour. The reactor was sealed, shaken in a water bath at 68°C for 3 hours, and cooled to room temperature. The polymer particles from the reaction mixture, when examined by optical microscopy, were uniformly sized and about 2 $\mu$m in diameter.

EXAMPLE 3

This example illustrates growing 5 $\mu$m-diameter particles from the 2$\mu$m particles of Example 2. The procedure of Example 2 was repeated, except that Mixture C was 23 parts by weight of the particle dispersion produced in Example 2. The resulting particles had a diameter of approximately 5 $\mu$m.

EXAMPLE 4

This example illustrates polymerizing an outer shell of methyl methacrylate and ethyl acrylate onto the particles of Examples 3, to finish the core/shell polymer particles of the present invention. The following aqueous mixtures were prepared:

7

| Mixture | Component | Parts by Weight |
|---|---|---|
| A | Particle dispersion from Ex. 3 | 1348 |
| B | Methyl Methacrylate | 96 |
|   | Ethyl Acrylate | 4.0 |
| C | 3% aqueous Sodium Formaldehyde Sulfoxylate | 10 |
|   | 10% aqueous Sodium Dodecylbenzenesulfonate | 1.5 |
|   | Water | 53 |
| D | t-Butyl Hydroperoxide | 0.45 |
|   | Water | 14 |

Mixture A was weighed into a reactor equipped with a stirrer and condenser and blanketed with nitrogen. The reactor contents were heated to 65°C and stirred under the nitrogen blanket; Mixture B, C and D were separately added to the reactor over a period of 90 minutes. The temperature was maintained at 65°C, and stirring was continued, for 30 minutes, after which the reactor contents were cooled to room temperature. The resulting particles were about 5 $\mu$m in diameter, with less than about 20% of the number of particles between 2 and 4 $\mu$m and a very small number of particles were below 0.5$\mu$m.

EXMAPLE 5

This example illustrates preparation of a different emulsion polymer for use in preparing the core/shell particles of the present invention. The following mixtures were prepared:

| Mixture | Component | Parts by Weight |
|---|---|---|
| A | Water | 208 |
| | Sodium Carbonate | 0.38 |
| B | Butyl Acrylate | 98 |
| | Butylene Glycol Diacrylate | 0.25 |
| | Allyl Methacrylate | 2.0 |
| | 10% aqueous Sodium Dodecylbenzenesulfonate | 4.0 |
| | Water | 40 |
| C | Potassium Persulfate | 0.063 |
| | Water | 35 |

A reactor equipped with stirrer and condenser and blanketed with nitrogen was charged with Mixture A and heated to 82°C. To the reactor contents was added 15% of Mixture B and 25% of Mixture C. The temperature was maintained at 82°C and the mixture was stirred for 1 hour, after which the remaining Mixture B and Mixture C were added to the reactor, with stirring over a period of 90 minutes. Stirring was continued at 82°C for 2 hours, after which the reactor contents were cooled to room temperature. The particle size in the resulting emulsion particles was 0.2 $\mu$m, as measured by Nanosizer.

EXAMPLE 6

In this example the particles in the emulsion of Example 5 are grown to 0.5 $\mu$m diameter using an emulsion of butyl acrylate and styrene. The following mixtures were prepared:

9

| Mixture | Component | Parts by Weight |
|---------|-----------|-----------------|
| A | Water | 185 |
| | Sodium Carbonate | 0.081 |
| | Polymer Emulsion from Example 5 | 35 |
| B | Butyl Acrylate | 82 |
| | Styrene | 18 |
| | 10% aqueous Sodium Dodecylbenzenesulfonate | 2.5 |
| | Water | 32 |
| C | 1-Hexanethiol | 19 |
| | 10% aqueous Sodium Dodecylbenzenesulfonate | 2.8 |
| | Water | 11 |
| D | Potassium Persulfate | 0.11 |
| | Water | 18 |
| E | t-Butyl Hydroperoxide | 0.18 |
| | Water | 3.7 |
| F | 3% aqueous Sodium Formaldehyde Sulfoxylate | 4.1 |

Mixture A was added to the reactor of Example 5 and heated to 88°C with stirring. Mixtures B, C and D were added, with stirring, to the reactor over a period of 3 hours, after which the temperature was maintained at 88°C, with stirring, for 90 minutes. The reactor contents were cooled to 65°C, Mixtures E and F were added, and the reactor contents were maintained at 65°C, with stirring, for 1 hour, after which the reactor contents were cooled to room temperature. The resulting emulsion polymer particles had a diameter of 0.5 µm as measured by Nanosizer.

EXAMPLE 7

This example illustrates growing 5 µm diameter particles from the 0.5 µm particles of Example 6 using an emulsion of butyl acrylate containing butylene glycol diacrylate crosslinker and allyl methacrylate graftlinker. In this example the procedure of Example 2 was repeated, except that 0.34 parts of the 0.5 µm diameter particle emulsion from Example 6 was used as Mixture C. The resulting polymer particles had a narrow particle size distribution and an average particle diameter of about 5 µm, as determined by optical microscopy.

10

EXAMPLE 8

This example illustrates polymerization of the outer shell onto the particles prepared in Example 7, to complete preparation of the second core/shell polymer particles of the present invention. The procedure of Example 4 was repeated, using the 5 $\mu$m particle dispersion prepared in Example 7 as Mixture A. The resulting particles had a narrow particle size distribution and particle size diameter of about 5 $\mu$m, as determined by optical microscopy.

EXAMPLE 9

This example illustrates preparation of a light-scattering polymer composition using the core/shell polymer particles of the present invention prepared in Example 8. The core/shell particles were isolated from the aqueous dispersion by coagulation with aqueous calcium hypophosphite coagulant, and 2 parts by weight of the particles were melt-blended with 98 parts by weight of poly (methyl methacrylate) having a weight-average molecular weight of about 120,000, at 232°C. The blended polymer was compression molded at 204°C into 12.7-cm-square plaques, and were evaluated for optical properties at room temperature. A goniophotometer was used to determine the intensity of light transmitted through the sample plaque at different angles; the sum of light transmitted at all angles is expressed as total luminous transmittance. The haze was determined using a HunterLab colorimeter. Hiding power is calculated by the following:

$$\text{Hiding Power} = \frac{I[2]}{I[0]}$$

where I [0] is the transmitted light intensity at an angle of 0°, and I[2] is the transmitted light intensity at an angle of 2°.

EXAMPLES 10-32

These examples illustrate the effect upon the optical properties of poly(methyl methacrylate) when it is blended with various concentrations of coreshell polymer particles of the present invention having different refractive indices and particle sizes. The desired refractive index of the inner stage (or core) polymer was achieved by copolymerizing butyl acrylate with appropriate amounts of styrene. Polymer particles larger than 5 $\mu$m were prepared by using the procedures of Example 3 except that Mixture C was an appropriate amount of 5-$\mu$m particle dispersion obtained from Example 3. Polymer particles smaller than 2 $\mu$m were prepared by using the procedures of Example 5 except that, depending upon the desirable final particle size, different amounts of sodium dodecylbenzenesulfonate and initial charge of Mixture B were used. The outer stage polymerizations were carried out using the procedures of Examples 4 and 8. All polymer particles had the same core/shell ratio of 80/20.

The results of optical property testing of these particles are shown in Table II.

TABLE Ia

Properties of Blends of PMMA and Polymer Particles

Polymer Particles

Approx. $n_D^{25}$

| Example No. | Thickness mil | Inner Stage Polymer | Outer Stage Polymer | Size $\mu$ |
|---|---|---|---|---|
| 10 | 40 | 1.463 | PMMA | 9 |
| 11 | " | " | " | 8 |
| 12 | " | " | " | " |
| 13 | " | " | " | 5 |
| 14 | " | 1.522 | " | " |
| 15 | " | 1.463 | " | " |
| 16 | " | " | " | 2 |
| 17 | " | " | " | " |
| 18 | " | " | " | 0.4 |
| 19 | " | " | " | " |
| 20 | " | " | " | 0.1 |
| 21 | " | " | " | " |
| 22 | 80 | " | " | 9 |
| 23 | " | " | " | 8 |
| 24 | " | " | " | " |
| 25 | " | " | " | 5 |

| 26 | " | 1.522 | " | " |
| 27 | " | 1.463 | " | 2 |
| 28 | " | " | " | " |
| 29 | " | " | " | C.4 |
| 30 | " | " | " | " |
| 31 | " | " | " | 0.1 |
| 32 | " | " | " | " |

## TABLE Ib

## Optical Properties of Blends of PMMA and Polymer

## Particles

## Total

## Luminous

| Example No. | Conc'n Wt. % | Trans. % | Hiding Power | Haze % |
|---|---|---|---|---|
| 10 | 9.0 | 93 | 1.0 | 97 |
| 11 | 5.0 | 93 | 0.95 | 96 |
| 12 | 9.0 | 93 | 0.98 | 98 |
| 13 | 5.0 | 93 | 0.97 | 98 |
| 14 | 5.0 | 93 | 0.97 | 96 |
| 15 | 9.0 | 92 | 1.0 | 98 |
| 16 | 5.0 | 92 | 0.57 | 97 |
| 17 | 9.0 | 90 | 0.63 | 98 |
| 18 | 5.0 | 80 | 0.029 | 64 |
| 19 | 9.0 | 69 | 0.0040 | 84 |
| 20 | 5.0 | 85 | 0.0045 | 10 |
| 21 | 9.0 | 79 | 0.0029 | 24 |
| 22 | 9.0 | 91 | 1.0 | 98 |
| 23 | 5.0 | 92 | 1.0 | 98 |
| 24 | 9.0 | 91 | 1.0 | 98 |
| 25 | 5.0 | 91 | 1.0 | 98 |
| 26 | 5.0 | 91 | 1.0 | 98 |
| 27 | 5.0 | 87 | 0.83 | 98 |
| 28 | 9.0 | 77 | 1.0 | 99 |
| 29 | 5.0 | 68 | 0.051 | 83 |

| 30 | 9.0 | 61 | 0.044 | 88 |
| 31 | 5.0 | 82 | 0.0049 | 15 |
| 32 | 9.0 | 72 | 0.0034 | 28 |

EXAMPLES 33-89

These examples illustrate the use of core/shell polymer particles of the present invention with different matrix polymers having different refractive indices. Because the refractive indices of the core polymers prepared in Examples 3 and 7 were adjusted to be suitable for poly(methyl methacrylate), the core/shell polymers of Examples 4 and 8 were unsuitable for most of these matrix polymers. Using the procedures of Examples 1-4 or 5-8, core/shell polymer particles of the present invention were prepared by adjusting the butyl acrylate/styrene ratio to achieve the refractive index appropriate to the matrix polymer. All polymer particles had the same core/shell ratio of 80/20. The resulting core/shell polymers were blended with the matrix polymers to produce light-scattering polymer compositions of the present invention. Table II shows the properties and processing conditions of the matrix polymers, and Tables III-VII show the properties of the matrix polymer-core/shell polymer blends of the present invention. Each blend was milled for 3 - 5 minutes.

Table II

| Matrix | Trade Name | Supplier | Milling/ Molding Temp °F | (°C) | Refractive Index |
|--------|-----------|----------|------|------|-------|
| PMMA | Plexiglas V-920 | Rohm and Haas | 450 | (232) | 1.49 |
| PS | Styron 666U | Dow Chem. Co. | 400 | (204) | 1.59 |
| PC | Merlon M-39 | Mobay Chem. Co. | 480 | (219) | 1.585 |
| PVC[a] | Oxyblend 161J | Occidental Chem. Corp. | 340 | (171) | 1.54 |
| PVAc[b] | | Polysciences | 320 | (160) | 1.467 |
| P(MMA/aMS)[c] | | Rohm and Haas Co. | 410 | (210) | 1.52 |

a Contains stablilzers and processing aid in formulation; no impact modifier or plasticizer. Refractive index given is for PVC homopolymer.

b Weight-average molecular weight is 500,000.

c Methyl methacrylate/alpha-methylstyrene/ethyl acrylate,

$$73.5/24.5/2; \text{Wt-Avg. MW} = 115,000.$$

The following examples illustrate polymer compositions of the present invention prepared by blending different matrix polymers with the light-scattering particles of the present invention. As the tables indicate, the 5- m particles diffuse light better than the smaller particles, which show a decrease in either total luminous transmittance or hiding power. These examples illustrate that blends of the particles of this invention with polystyrene, polycarbonate, poly(vinyl chloride), poly (vinyl acetate) and poly(methyl methacrylateco-alpha-methylstyrene) are effective light diffusers with good light transmittance.

## Table IIIa

### Optical Properties of Blends of

### Polystyrene (PS) and Polymer Particles

Polymer Particles

| Example No. | Thick- ness, mil | Approx. Inner Stage Polymer | $N_D^{25}$ Outer Stage Polymer | Size M | Conc. Wt. % |
|---|---|---|---|---|---|
| 33 | 40 | -- | -- | -- | 0 |
| 34 | " | 1.560 | PS | 5 | 5.0 |
| 35 | " | " | " | 2 | " |
| 36 | " | " | " | " | 10 |
| 37 | 80 | -- | -- | -- | 0 |
| 38 | " | 1.560 | PS | 5 | 5.0 |
| 39 | " | " | " | 2 | " |
| 40 | " | " | " | " | 10 |

## Table IIIb

## Optical Properties of Blends of

## Polystyrene (PS) and Polymer Particles

Optical Properties

| Example No. | Total Luminous Transmittance, % | Hiding Power | Haze % |
|---|---|---|---|
| 33 | 92 | 0.0038 | 7.5 |
| 34 | 91 | 1.0 | 97 |
| 35 | 89 | 0.11 | 95 |
| 36 | 78 | 0.96 | 98 |
| 37 | 90 | 0.0036 | 9.6 |
| 38 | 84 | 1.0 | 98 |
| 39 | 85 | 0.60 | 98 |
| 40 | 78 | 0.96 | 99 |

## Table IVa

### Optical Properties of Blends of Polycarbonate and Polymer

### Particles

#### Polymer Particles

Approx. $N_D^{25}$

| Example No. | Thick-ness, mil | Inner Stage Polymer | Outer Stage Polymer | Size $M$ | Conc. Wt.% |
|---|---|---|---|---|---|
| 41 | 40 | -- | -- | -- | 0 |
| 42 | " | 1/560 | PMMA | 5 | 3.0 |
| 43 | " | " | " | '' | 5.0 |
| 44 | " | " | " | " | 7.0 |
| 45 | " | " | " | 2 | 3.0 |
| 46 | " | " | " | " | 5.0 |
| 47 | 80 | -- | -- | -- | 0 |
| 48 | " | 1.560 | PMMA | 5 | 3.0 |
| 49 | " | " | " | " | 5.0 |
| 50 | " | " | " | " | 7.0 |
| 51 | " | " | " | 2 | 3.0 |
| 52 | " | " | " | " | 5.0 |

Table IVa

TABLES VIb

<u>Optical Properties</u>

| Example No. | Total Luminous Transmittance, % | Hiding Power | Haze % |
|---|---|---|---|
| 41 | 90 | 0.0048 | 6.5 |
| 42 | 87 | 0.91 | 96 |
| 43 | 82 | 1.0 | 97 |
| 44 | 76 | 1.0 | 98 |
| 45 | 77 | 0.77 | 98 |
| 46 | 69 | 1.0 | 99 |
| 47 | 90 | 0.0073 | 7.6 |
| 48 | 81 | 0.97 | 98 |
| 49 | 72 | 1.0 | 99 |
| 50 | 65 | 1.0 | 99 |
| 51 | 67 | 1.0 | 99 |
| 52 | 57 | 1.0 | 99 |

TABLE Va

Properties of Blends of Poly(vinyl chloride) (PVC)

and Polymer Particles

| | | Polymer Particles | | | |
|---|---|---|---|---|---|
| | Approx. | $N_D^{25}$ | | | |
| | Thick- | Inner | Outer | | |
| Example | ness, | Stage | Stage | Size | Conc. |
| No. | mil | Polymer | Polymer | M | Wt.% |
| 53 | 40 | 1.515 | PMMA | 5 | 5.0 |
| 54 | " | " | " | " | 10 |
| 55 | " | " | " | 2 | 5.0 |
| 56 | " | " | " | " | 10 |
| 57 | 80 | -- | -- | -- | 0 |
| 58 | " | 1.515 | PMMA | 5 | 5.0 |
| 59 | " | " | " | .. | 10 |
| 60 | " | " | " | 2 | 5.0 |
| 61 | " | " | " | " | 10 |

20

TABLE Vb

Optical Properties of Blends of Poly(Vinyl Chloride) (PVC)

and Polymer Particles

Optical Properties

| Example No. | Total Luminous Transmittance, % | Hiding Power | Haze % |
|---|---|---|---|
| 53 | 80 | 0.96 | 98 |
| 54 | 72 | 1.0 | 98 |
| 55 | 70 | 0.89 | 97 |
| 56 | 66 | 1.0 | 98 |
| 57 | 75 | 0.0035 | 7.5 |
| 58 | 66 | 1.0 | 98 |
| 59 | 59 | 1.0 | 99 |
| 60 | 52 | 0.93 | 98 |
| 61 | 47 | 1.0 | 99 |

EP 0 269 324 B1

TABLE VIa

Optical Properties of Blends of Poly(vinyl acetate) (PVAc)

and Polymer Particles

Polymer Particles

| Example No. | Approx. Thick-ness, mil | $N_D^{25}$ Inner Stage Polymer | Outer Stage Polymer | Size M | Conc. Wt. % |
|---|---|---|---|---|---|
| 62 | 40 | -- | -- | -- | 0 |
| 63 | " | 1.500 | PVAc | 5 | 5.0 |
| 64 | " | 1.491 | PMMA | " | " |
| 65 | " | 1.500 | PVAc | " | 10 |
| 66 | " | 1.491 | PMMA | " | " |
| 67 | " | 1.500 | PVAc | 2 | 5.0 |
| 68 | " | " | " | " | 10 |
| 69 | 80 | -- | -- | -- | 0 |
| 70 | " | 1.500 | PVAc | 5 | 5.0 |
| 71 | " | 1.491 | PMMA | " | " |
| 72 | " | 1.500 | PVAc | " | 10 |
| 73 | " | 1.491 | PMMA | " | " |
| 74 | " | 1.500 | PVAc | 2 | 5.0 |
| 75 | " | " | " | " | 10 |

22

## TABLE VIb

## Optical Properties of Blends of Poly(Vinyl Acetate) (PVAc)

## and Polymer Particles

Optical Properties

| Example No. | Total Luminous Transmittance, % | Hiding Power | Haze % |
|---|---|---|---|
| 62 | 92 | 0.0046 | 3.7 |
| 63 | 91 | 0.98 | 98 |
| 64 | 90 | 1.0 | 98 |
| 65 | 89 | 1.0 | 99 |
| 66 | 86 | 1.0 | 98 |
| 67 | 89 | 0.19 | 98 |
| 68 | 88 | 0.75 | 97 |
| 69 | 88 | 0.0038 | 5.5 |
| 70 | 87 | 1.0 | 99 |
| 71 | 85 | 1.0 | 98 |
| 72 | 81 | 1.0 | 98 |
| 73 | 74 | 1.0 | 99 |
| 74 | 79 | 0.95 | 98 |
| 75 | 75 | 1.0 | 99 |

TABLE VIIa

## Poly(Methyl Methacrylate-co-alph-Methylstyrene)

## and Polymer Particles

### Polymer Particles

| Example No. | Approx. Thick-ness, mil | $N_D^{25}$ Inner Stage Polymer | Outer Stage Polymer | Size M | Conc. Wt.% |
|---|---|---|---|---|---|
| 76 | 40 | -- | -- | -- | 0 |
| 77 | " | 1.463 | PMMA | 5 | 0.30 |
| 78 | " | " | " | " | 0.50 |
| 79 | " | " | " | " | 0.70 |
| 80 | 80 | -- | -- | -- | 0 |
| 81 | " | 1.463 | PMMA | 5 | 0.30 |
| 82 | " | " | " | " | 0.50 |
| 83 | " | " | " | " | 0.70 |
| 84 | " | 1.490 | " | " | 1.50 |
| 85 | " | " | " | " | 3.0 |
| 86 | " | 1.500 | P(MMA/aMS) | " | 1.50 |
| 87 | " | " | " | " | 3.0 |
| 88 | " | 1.490 | " | 2 | 1.5 |
| 89 | " | " | " | " | 3.0 |

TABLE VIIb

Poly(Methyl Methacrylate-co-alpha-Methylstyrene)

and Polymer Particles

Optical Properites

| Example No. | Total Luminous Transmittance, % | Hiding Power | Haze % |
|---|---|---|---|
| 76 | 92 | 0.0044 | 6.5 |
| 77 | 90 | 0.076 | 59 |
| 78 | 90 | 0.30 | 85 |
| 79 | 90 | 0.32 | 86 |
| 80 | 91 | 0.0068 | 9.5 |
| 81 | 88 | 0.13 | 77 |
| 82 | 86 | 0.81 | 95 |
| 83 | 86 | 0.89 | 96 |
| 84 | 82 | 0.95 | 97 |
| 85 | 78 | 1.0 | 98 |
| 86 | 78 | 0.78 | 94 |
| 87 | 58 | 0.98 | 99 |
| 88 | 63 | 0.24 | 99 |
| 89 | 56 | 0.97 | 100 |

The following words: Plexiglas, Styron, Merlon, Oxyblend, HunterLab; are trademarks which may be Registered in some or all designated states.

**Claims**

1. A particulate polymer composition suitable for incorporating into a thermoplastic polymer matrix to form a light-diffusing polymer composition, comprises particles of core/shell polymer having an average diameter of from 2 to 15 $\mu$m, a particle size distribution such that at least 90% by weight of the particles fall within ±20% of the average particle diameter, a core of rubbery alkyl acrylate polymer, the alkyl group having from 2 to 8 carbon atoms, copolymerised with 0 to 50% copolymerizable vinyl monomer, 0 to 5% crosslinker and 0 to 5% graftlinker (based on the total weight of the core) and having a refractive index ($n_D^{25}$) within 0.2 units of, but preferably no closer than ±0.003 to, the refractive index of the matrix polymer, and one or more polymer shells, the outer most of which is compatible with the matrix polymer, which shells comprise from 5 to 40% of the weight of the particles.

2. The particulate polymer composition as claimed in Claim 1, wherein the rubbery alkyl acrylate polymer is a copolymer of alkyl acrylate and upto 50% of one or more copolymerizable vinyl monomers, preferably being a monovinyl monomer.

3. The particulate polymer composition as claimed in Claim 2, wherein the alkyl acrylate monomer is

25

copolymerised with one or more alkyl methacrylate and/or vinyl arene, preferably one or more monovinyl arene.

4. The particulate polymer composition as claimed in Claim 2 or Claim 3, wherein the, or one of the, copolymerizable monovinyl monomer(s) is styrene.

5. The particulate polymer composition as claimed in any one of the preceding claims, wherein the alkyl acrylate monomer is butyl acrylate.

6. The particulate polymer composition as claimed in any one of the preceding claims, wherein the outer most shell is a polymer of an alkyl methacrylate, vinyl arene, vinyl carboxylate and/or alkyl acrylate.

7. A process for preparing a particulate polymer composition according to Claim 1,suitable for incorporating into a thermoplastic matrix polymer to form light-diffusing polymer compositions, which comprises:
   (A) forming or selecting, as rubbery core polymer composition, an aqueous emulsion of copolymer of alkyl acrylate, the alkyl group having from 2 to 8 carbon atoms, with from 0 to 50% copolymerizable vinyl monomer, 0 to 5% crosslinker and 0 to 5% graftlinker (based on the total weight of the core copolymer) and the copolymer having a refractive index with ±0.2 units, preferably ±0.05, units of, but preferably no closer than ±0.003 units to, the refractive index of the thermoplastic matrix polymer,
   (B)1 swelling the polymer particles of A, or if appropriate the particles of (B) 2, with one or more monomers and
   (B)2 polymerising the swelling monomer within the particles until all of the monomer has been polymerised,
   steps (B)1 and (B)2 being repeated, if necessary until at least 90% by weight of the particles of the particulate composition fall, in average particle diameter, within ± 20% of a desired size which is preferably in the range 2 to 15 $\mu$m, and
   (C)1 suspending the resulting polymer particles, or if appropriate the particles of (C)2, in a second aqueous monomer emulsion and
   (C)2 polymerising onto the polymer particles a polymer shell from the monomer in the emulsion of (C)1,
   steps (C)1 and (C)2 being repeated if necessary with the same or different monomer emulsion, to form one or more polymer shells, the outermost of which is compatible with the matrix polymer, which shells comprise from 5 to 40% of the weight of the particles, the particles having a size distribution such that at least 90% by weight thereof fall within ± 20% of the average particle diameter of from 2 to 15 $\mu$m.

8. The process of Claim 7, wherein the polymerization of step A) is conducted under conditions that form the emulsion polymer as an easily swellable oligomer, preferably conditions including the presence of a chain-transfer moderator, for example a mercaptan.

9. The process of Claim 7 or 8, wherein one or more polymerizations of step B-2) are conducted under conditions that form a readily swellable oligomer from the swelling monomer, preferably conditions including the presence of a chain-transfer moderator, for example a mercaptan.

10. The process of any of Claims 7 to 9, wherein the first and second monomer emulsions are such that the core/shell polymer particles formed are as claimed in any one of Claims 2 to 6.

11. A light-diffusing thermoplastic polymer composition which comprises a thermoplastic matrix polymer and, distributed throughout the matrix polymer, from about 0.1% to about 10% of the total composition weight of particles of polymer as claimed in any one of Claims 1 to 6 or particles made in accordance with the process claimed in any one of Claim 7 to 10.

12. The light-diffusing composition of Claim 11 wherein the matrix polymer is clear and preferably has a glass-transition temperature no less than 50°C.

13. The light-diffusing composition of Claim 11 or Claim 12, wherein the matrix polymer is a homopolymer of polymethylmethacrylate, poly(styrene), poly(vinyl chloride), poly(cellulose acetate butylate), poly-

(ethylene terephthalate) or poly(glutarimides).

14. The light-diffusing composition of Claim 11 or Claim 12, wherein the matrix polymer is a copolymer of poly(methyl methacrylate-co-alkyl acrylate) wherein the alkyl group contains 1 to 8 carbon atoms, poly-(styrene-co-acrylonitrile) containing up to 40% acrylonitrile units, poly(styrene-co-methyl methacrylate), poly(alpha-methylstyrene-co-methyl methacrylate), poly (alpha-methylstyrene-co-alkyl acrylate) wherein the alkyl group contains 1 to 8 carbon atoms, poly(vinyl chloride-co-vinyl acetate) and poly(vinyl chloride-co-propylene).

**Patentansprüche**

1. Partikuläre zum Einbau in eine thermoplastische Polymermatrix geeignete Polymerzusammensetzung, wodurch eine Licht-zerstreuende Polymerzusammensetzung ausgebildet wird, enthaltend Partikel eines Kern-/Hüllpolymers mit einem durchschnittlichen Durchmesser von 2-15 $\mu$m und einer Partikelgrößenverteilung derart, daß mindestes 90 Gew.-% der Partikel innerhalb von ± 20 % des durchschnittlichen Partikeldurchmessers liegen, einem mit 0-50 % eines copolymerisierbaren Vinylmonomers, 0-5 % eines Vernetzers und 0-5 % eines Pfropflinkers (basierend auf dem Gesamtgewicht des Kerns) copolymerisierten Kern eines gummiartigen Alkylacrylatpolymers, wobei der Alkyl-Rest 2-8 C-Atome aufweist, und einem Brechungsindex ($n_D35$) innerhalb von 0,2 Einheiten von, jedoch vorzugsweise nicht mehr als ± 0,003 zu dem Brechungsindex der Polymermatrix, und ein oder mehrere Polymerhüllen, von denen die äußere mit der Polymermatrix verträglich ist, und die 5-40 Gew.-% der Partikel ausmachen.

2. Partikuläre Polymerzusammensetzung nach Anspruch 1, worin das gummiartige Alkylacrylatpolymer ein Copolymer aus Alkylacrylat und bis zu 50 % eines oder mehrerer copolymerisierbarer Vinylmonomere, vorzugsweise ein Monovinylmonomer ist.

3. Partikuläre Polymerzusammensetzung nach Anspruch 2, worin das Alkylacrylatmonomer mit ein oder mehreren Alkylmethacrylaten und/oder Vinylarenen, vorzugsweise ein oder mehr Monovinylarene, copolymerisiert ist.

4. Partikuläre Polymerzusammensetzung nach Anspruch 2 oder 3, worin das oder eines der copolymerisierbaren Monovinylmonomere Styrol ist.

5. Partikuläre Polymerzusammensetzung nach einem der vorhergehenden Ansprüche, worin das Alkylacrylatmonomer Butylacrylat ist.

6. Partikuläre Polymerzusammensetzung nach einem der vorhergehenden Ansprüche, worin die äußere Hülle ein Polymer aus einem Alkylmethacrylat, Vinylaren, Vinylcarboxylat und/oder Alkylacrylat ist.

7. Verfahren zur Herstellung einer partikulären Polymerzusammensetzung nach Anspruch 1, geeignet zum Einbau in eine thermoplastische Polymermatrix, wodurch Licht-zerstreuende Polymerzusammensetzungen ausgebildet werden, bei dem:

(A) Eine wäßrige Emulsion eines Copolymers aus Alkylacrylat, wobei der Alkyl-Rest 2-8 C-Atome aufweist, 0-50 % copolymerisierbarem Vinylmonomer, 0-5 % Vernetzer und 0-5 % Pfropflinker (basierend auf dem Gesamtgewicht des Kern-Copolymers) als gummiartige Kern-Polymerzusammensetzung ausgebildet oder ausgewählt wird, und das Copolymer einen Brechungsindex innerhalb von ± 0,2 Einheiten, vorzugsweise ± 0,05 Einheiten von, vorzugsweise jedoch nicht näher als ± 0,003 Einheiten zu dem Brechungsindex der thermoplastischen Polymermatrix hat,

(B)1 die Polymerpartikel von A oder, wenn angemessen, die Partikel von (B) 2 mit ein oder mehr Monomeren gequollen werden und

(B)2 das quellende Monomer innerhalb der Partikel solange polymerisiert wird, bis das gesamte Monomer polymerisiert ist,

wobei die Schritte (B)1 und (B)2 wiederholt werden, wenn nötig, bis mindestens 90 Gew.-% der Partikel der partikulären Zusammensetzung in ihrem durchschnittlichen Partikeldurchmesser innerhalb von ± 20 % einer gewünschten Größe liegen, die vorzugsweise im Bereich von 2 bis 15 $\mu$m liegt, und

(C)1 die erhaltenen Polymerpartikel oder, wenn angemessen, die Partikel von (C)2 in einer zweiten wäßrigen Monomeremulsion suspendiert werden und

(C)2 auf den Polymerpartikeln eine Polymerhülle aus dem Monomer in der Emulsion von (C)1 polymerisiert wird,

wobei die Schritte (C)1 und (C)2, wenn nötig, mit der gleichen oder einer unterschiedlichen Monomeremulsion wiederholt werden, wodurch ein oder mehrere Polymerhüllen ausgebildet werden, von denen die äußere mit der Polymermatrix verträglich ist und die Hüllen 5-40 Gew.-% der Partikel umfassen, wobei die Partikel eine Größenverteilung umfassen derart, daß mindestens 90 Gew.-% davon innerhalb von ± 20 % des durchschnittlichen Partikeldurchmessers von 2-15 $\mu$m liegen.

8. Verfahren nach Anspruch 7, worin die Polymerisation von Schritt (A) unter Bedingungen durchgeführt wird, die das Emulsionspolymer als leicht quellbares Oligomer ausbilden, vorzugsweise unter Bedingungen, einschließlich des Vorliegens eines Kettenübertragungsmoderators, beispielsweise von Mercaptan.

9. Verfahren nach Anspruch 7 oder 8, worin ein oder mehrere Polymerisationen von Schritt (B)2 unter Bedingungen durchgeführt werden, die aus dem quellenden Monomer ein leicht quellbares Oligomer ausbilden, vorzugsweise unter Bedingungen, einschließlich des Vorliegens eines Kettenübertragungsmoderators, beispielsweise von Mercaptan.

10. Verfahren nach einem der Anprüche 7 bis 9, worin die erste und zweite Monomeremulsion so ist, daß die ausgebildeten Kern-/Hüll-Polymerteilchen wie in einem der Ansprüche 2 bis 6 definiert sind.

11. Licht-zerstreuende, thermoplastische Polymerzusammensetzung, umfassend eine thermoplastische Polymermatrix und, verteilt über die Polymermatrix, mit etwa 0,1 % bis etwa 10 % des gesamten Zusammensetzungsgewichts Polymerpartikel nach einem der Ansprüche 1-6 oder gemäß des Verfahrens gemäß einem der Ansprüche 7-10 erhaltene Partikel.

12. Licht-zerstreuende Zusammensetzung nach Anspruch 11, worin die Polymermatrix klar ist und vorzugsweise die Glasumwandlungstemperatur von nicht weniger als 50°C aufweist.

13. Licht-zerstreuende Zusammensetzung nach Anspruch 11 oder 12, worin die Polymermatrix ein Homopolymer von Polymethylmethacrylat, Poly(styrol), Poly(vinylchlorid), Poly(celluloseacetatbutylat), Poly(ethylenterephthalat) oder Poly(glutarimiden) ist.

14. Licht-zerstreuende Zusammensetzung nach Anspruch 11 oder 12, worin die Polymermatrix ein Copolymer von Poly(methylmethacrylat-co-alkylacrylat), worin der Alkylrest 1-8 C-Atome enthält, Poly(styrol-co-acrylonitril) mit bis zu 40 % Acrylonitril-Einheiten, Poly(styrol-co-methacrylat), Poly(alpha-methylstyrol-co-methylmethacrylat), Poly(alpha-methylstyrol-co-alkylacrylat), worin der Alkyl-Rest 1-8 C-Atome enthält, Poly(vinylchlorid-co-vinylacetat) und Poly(vinylchlorid-co-propylen) ist.

**Revendications**

1. Une composition de polymère en particules se prêtant à l'incorporation dans une matrice de polymère thermoplastique en vue de la formation d'une composition de polymère diffusant la lumière, comprend des particules d'un polymère de coeur/enveloppe possédant un diamètre moyen de 2 à 15 $\mu$m, une répartition granulométrique telle qu'au moins 90% en poids des particules se placent dans la fourchette de ± 20% du diamètre de particule moyen, un coeur constitué d'un polymère d'acrylate d'alkyle caoutchouteux, le groupe alkyle possédant 2 à 8 atomes de carbone, copolymérisé avec 0 à 50% de monomère vinylique copolymérisable, 0 à 5% de réticulant et 0 à 5% d'agent de greffage (par rapport au poids total du coeur) et possédant un indice de réfraction ($n_D25$) dans les limites de 0,2 unité, mais de préférence pas plus près que ± 0,003, de l'indice de réfraction du polymère de la matrice, et une ou plusieurs enveloppes de polymère, l'enveloppe externe étant compatible avec le polymère de la matrice, lesdites enveloppes représentant 5 à 40% du poids des particules.

2. La composition de polymère en particules selon la revendication 1, dans laquelle le polymère d'acrylate d'alkyle caoutchouteux est un copolymère d'acrylate d'alkyle et, jusqu'à concurrence de 50%, d'un ou de plusieurs monomères vinyliques copolymérisables, un monomère monovinylique étant préféré.

**3.** La composition de polymère en particules selon la revendication 2, dans laquelle le monomère d'acrylate d'alkyle est copolymérisé avec un ou plusieurs méthacrylates d'alkyle et/ou arènes vinyliques, de préférence avec un ou plusieurs arènes monovinyliques.

**4.** La composition de polymère en particules selon la revendication 2 ou 3 dans laquelle le ou un des monomères monovinyliques copolymérisables est le styrène.

**5.** La composition de polymère en particules selon l'une quelconque des revendications précédentes, dans laquelle le monomère d'acrylate d'alkyle est l'acrylate de butyle.

**6.** La composition de polymère en particules selon l'une quelconque des revendications précédentes, dans laquelle l'enveloppe externe est un polymère d'un méthacrylate d'alkyle, d'un arène vinylique, d'un carboxylate vinylique et/ou d'un acrylate d'alkyle.

**7.** Un procédé pour la préparation d'une composition de polymère en particules selon la revendication 1 se prêtant à l'incorporation dans un polymère de matrice thermoplastique pour former des compositions de polymère diffusant la lumière, qui comprend les étapes consistant :

A) à former ou a sélectionner, en tant que composition de polymère de coeur caoutchouteux, une émulsion aqueuse de copolymère d'acrylate d'alkyle, le groupe alkyle comportant 2 à 8 atomes de carbone, avec 0 à 50% de monomère vinylique copolymérisable, 0 à 5% de réticulant et 0 à 5% d'agent de greffage (par rapport au poids total du copolymère de coeur), le copolymère ayant un indice de réfraction dans la limite de ± 0,2 unité, de préférence de ± 0,05 unité, mais de préférence pas plus près que ± 0,003 unité de l'indice de réfraction du polymère de la matrice thermoplastique,

(B)1 à gonfler les particules de polymères de A ou, le cas échéant, les particules de (B)2, avec un ou plusieurs monomères et

(B)2 à polymériser le monomère gonflant au sein des particules jusqu'à polymérisation de la totalité du monomère, les étapes (B)1 et (a)2 étant répétées, si nécessaire, jusqu'à ce qu'au moins 90% en poids des particules de la composition en particules se placent, en diamètre de particule moyen, dans la limite de ± 20% d'une taille souhaitée qui se situe de préférence dans la gamme de 2 à 15 $\mu$m et

(C)1 à mettre les particules de polymère résultantes où, le cas échéant, les particules de (C)2 en suspension dans une deuxième émulsion de monomère aqueuse et

(C)2 à polymériser sur les particules de polymère une enveloppe de polymère à partir du monomère de l'émulsion de (C) 1, les étapes (C)1 et (C)2 étant répétées, si nécessaire, avec la même émulsion de monomère ou une émulsion différente, en vue de former une ou plusieurs enveloppes de polymère, l'enveloppe externe étant compatible avec le polymère de la matrice, lesdites enveloppes représentant 5 à 40% du poids des particules, les particules possédant une répartition granulométrique telle qu'au moins 90% en poids de celles-ci se placent dans la fourchette de ± 20% du diamètre de particule moyen de 2 à 15 $\mu$m.

**8.** Le procédé selon la revendication 7, dans lequel la polymérisation de l'étape A est conduite dans des conditions donnant naissance au polymère en émulsion sous forme d'oligomère facilement gonflable, de préférence dans des conditions incluant la présence d'un agent modérateur de transfert de chaîne, par exemple un mercaptan.

**9.** Le procédé selon la revendication 7 ou 8, dans lequel une ou plusieurs polymérisations de l'étape (B)2 sont conduites dans des conditions formant un oligomère facilement gonflable à partir du monomère gonflant, de préférence dans des conditions incluant la présence d'un agent modérateur de transfert de chaîne, par exemple un mercaptan.

**10.** Le procédé selon l'une quelconque des revendications 7 à 9, dans lequel les première et deuxième émulsions de monomère sont telles que les particules de polymère de coeur/enveloppe formées sont telles que revendiquées dans l'une quelconque des revendications 2 à 6.

**11.** Une composition de polymère thermoplastique diffusant la lumière qui comprend un polymère de matrice thermoplastique et, répartis dans l'ensemble du polymère de matrice, environ 0,1% à environ 10% par rapport au poids total de la composition, de particules de polymère telles que revendiquées dans l'une quelconque des revendications 1 à 6 ou de particules produites selon le procédé revendiqué

29

dans l'une quelconque des revendications 7 à 10.

12. La composition diffusant la lumière selon la revendication 11, dans laquelle le polymère de matrice est limpide et possède de préférence une température de transition vitreuse non inférieure à 50°C.

13. La composition diffusant la lumière selon la revendication 11 ou la revendication 12, dans laquelle le polymère de la matrice est un homopolymère de poly(méthacrylate de méthyle), de poly(styrène), de poly(chlorure de vinyle), de poly(acéto-butyrate de cellulose), de poly(téréphtalate d'éthylène) ou de poly(glutarimides).

14. La composition diffusant la lumière selon la revendication 11 ou la revendication 12, dans laquelle le polymère de matrice est un copolymère de poly(méthacrylate de méthyle - co-acrylate d'alkyle) dans lequel le groupe alkyle contient 1 à 8 atomes de carbone, de poly(styrène-co-acrylonitrile) contenant jusqu'à 40% de motifs acrylonitrile, de poly(styrène-co-méthacrylate de méthyle), de poly(alpha-méthylstyrène-co-méthacrylate de méthyle), de poly(alpha-méthylstyrène-co-acrylate d'alkyle) dans lequel le groupe alkyle contient 1 à 8 atomes de carbone, de poly(chlorure de vinyle-co-acétate de vinyle) et de poly(chlorure de vinyle-co-propylène).